# EUROPÄISCHE PATENTSCHRIFT

(11) **EP 1 808 612 B1**
(45) Veröffentlichungstag und Bekanntmachung des Hinweises auf die Patenterteilung: **28.03.2012**
(21) Anmeldenummer: 06025902.5
(22) Anmeldetag: 14.12.2006
(51) Int. Cl.: F16D 23/14

(54) **Ausrückvorrichtung für eine Fahrzeugkupplung**
Release device for a vehicle clutch
Butée de débrayage d'un véhicule automobile

(30) Priorität: 11.01.2006 DE 102006001469
(43) Veröffentlichungstag der Anmeldung: 18.07.2007
(73) Patentinhaber: Schaeffler Technologies AG & Co. KG, 91074 Herzogenaurach (DE)
(72) Erfinder: Heitbaum, Markus, 77830 Bühlertal (DE)

(56) Entgegenhaltungen:
- EP-A- 0 167 287
- DE-A1- 19 727 874
- FR-A1- 2 745 616
- GB-A- 2 190 455

## Beschreibung

Die vorliegende Erfindung betrifft eine Ausrückvorrichtung für eine Fahrzeugkupplung, bei der ein Gehäuse der Ausrückvorrichtung mit einem Deckellager verbunden ist, das eine drehbare Verbindung mit einem Gehäusedeckel ermöglicht.

Eine derartige Betätigungsvorrichtung, meist als Zentralausrücker bezeichnet, wird in einem hydraulischen Ausrücksystem insbesondere zur Betätigung einer Fahrzeugkupplung im Antriebsstrang eines Kraftfahrzeuges verwendet.

In der GB 2 190 455 A wird eine Lösung für eine Bajonett-Kupplung aufgezeigt, mittels derer das Ausrücklager Zentralausrückers mit den Zungen der Tellerfeder einer Kupplung verbunden wird. Zur Verhinderung des Lösens durch Aufdrehen dieser Verbindung dient eine Verdrehsicherung, die in die hinter die Tellerfederzungen greift.

Zur Erleichterung der Montage wird in der FR 2 745 616 A1 eine Lösung für eine Anbindung eines bereits komplett vormontierten Ausrückers an ein festes Teil beschrieben, die mit Hilfe einer Bajonettverbindung hergestellt wird.

Ebenfalls zur Verbesserung der Montage eines Ausrückers an eine Kupplung dienen die Lösungen nach DE 197 27 874 A1 und EP 0 167 287 A1 Lösungen, die den Ausrücker, mit der Kupplung bajonettartig verbinden. In der EP 0 167 287 A1 ist zur Erleichterung der Montage eines der beiden zu verbindenden Teile spielbehaftet ausgebildet.

Ein als so genannter Zentralausrücker um die Getriebeeingangswelle angeordneter Nehmerzylinder ist beispielsweise aus der DE 44 227 942 bekannt. Ein derartiger Nehmerzylinder weist ein Gehäuse auf, das mittels Befestigungsmitteln an einem Getriebegehäuse oder einer Kupplungsglocke aufgenommen ist. Dies bedeutet, dass zur Montage eines Kupplungssystems die Kupplung an der Antriebswelle, die Kurbelwelle und das Ausrücksystem an der Getriebeseite befestigt wird und erst bei der Endmontage des Antriebsstranges beide Komponenten miteinander kombiniert werden.

Aus der DE 101 38 722 ein gattungsbildendes so genanntes deckelfestes System bekannt, bei dem der Nehmerzylinder an einem Gehäusedeckel der Kupplung angeordnet ist und mittels eines zusätzlichen Deckellagers diesem gegenüber drehbar angeordnet ist, so dass der eigentliche Nehmerzylinder wiederum drehfest gegenüber der Kupplungsglocke bzw. dem Getriebegehäuse gelagert ist. Der Nehmerzylinder stützt sich dabei gegen Drehung mittels der hydraulischen Zuleitung ab. Ein Lagerdeckel trägt ein Wälzlager für die drehbare Aufnahme des Nehmerzylinders. Der Lagerdeckel und der Gehäusedeckel sind mittels eines Bajonettverschlusses miteinander verbunden.

Der Lagerinnenring des Deckellagers ist mit dem Gehäuse des Zentralausrückers zu verbinden, wobei beide in der Regel einzeln gefertigt werden. Insbesondere wenn das Gehäuse des Zentralausrückers aus Kunststoff ist, ist hierzu eine Verbindung zwischen beiden erforderlich. In der DE 101 38 722 ist der Lagerinnenring des Deckellagers mit Sicherungsringen axial an dem Gehäuse fixiert.

Nachteilig an einer derartigen Befestigung ist, dass die Verdrehsicherung des Lagerinnenrings gegenüber dem Gehäuse z.B. mittels eines Schrumpfsitzes oder dergleichen herbeigeführt werden muss, was bei einem metallischen Lagerinnenring und einem Kunststoffgehäuse durch die dabei hervorgerufene elastische Verformung des Gehäuses von Nachteil ist.

Eine Aufgabe der vorliegenden Erfindung ist es daher, eine Ausrückvorrichtung mit einer Verbindung zwischen Deckellager und Gehäuse anzugeben, die eine einfache Montage zulässt und mit der eine sichere Verbindung zwischen Ausrückvorrichtung und Gehäusedeckel der Kupplung herstellbar ist.

Dieses Problem wird gelöst durch eine Ausrückvorrichtung nach dem unabhängigen Anspruch. Das Problem wird insbesondere gelöst durch eine Ausrückvorrichtung für eine Fahrzeugkupplung, bei der ein Gehäuse der Ausrückvorrichtung mit einem Deckellager mittels Bajonettverschluss mit dem Gehäuse verbunden ist, das eine drehbare Verbindung mit einem Gehäusedeckel ermöglicht, wobei der Bajonettverschluss eine Verdrehsicherung aufweist.

Diese Verdrehsicherung verhindert ein Rückdrehen oder Weiterdrehen des Deckellagers gegenüber dem Gehäuse. Die Verdrehsicherung ist dabei vorzugsweise ein Stützring, der mindestens einen Axialsteg umfasst, der in einen Einführspalt eingreift. Vorzugsweise ist vorgesehen, dass der Stützring mehrere Axialstege umfasst, die jeweils in einen Einführspalt eingreifen. Dabei kann je ein Axialsteg in einen Einführspalt eingreifen und jeweils eine Verriegelung des Bajonettverschlusses bewirken. In einer bevorzugten Ausführungsform ist vorgesehen, dass der mindestens eine Axialsteg eine axiale Länge aufweist, die etwa der Summe der axialen Länge des Steges und axialen Länge der Ringnut entspricht. Der Stützring wird so über seinen gesamten Umfang in Axialrichtung abgestützt, da mit den Anschlägen und Stegen des Gehäuses über den Gesamten Umfang ein Widerlager vorhanden ist. Vorzugsweise ist vorgesehen, dass der Bajonettverschluss mindestens einen Steg und mindestens einen Einführspalt an dem Gehäuse sowie mindestens einen dazu korrespondierenden Innensteg und Innenspalt an dem Deckellager umfasst, wobei der Innensteg in einer Einführstellung des Deckellagers gegenüber dem Gehäuse in den Einführspalt bis zu einer Verdrehstellung axial eingeschoben werden kann und durch Drehen in eine Endstellung gebracht werden kann.

Der Bajonettverschluss umfasst vorzugsweise mindestens einen Anschlag. Der Anschlag und der Steg bilden vorzugsweise eine Ringnut, deren axiale Länge der axialen Länge des Innensteges entsprechen. Der Innensteg kann also in die Ringnut durch Drehen eingeschwenkt werden. Der Anschlag begrenzt den axialen Weg, um den das Deckellager auf das Gehäuse aufgeschoben werden kann, sodass mit Erreichen des Anschlages ein einschwenken der Stege in die Ringnut erfolgen kann. Vorzugsweise erstreckt sich der Anschlag über einen Teil des Umfanges des Einführspaltes. Vorzugsweise sind mehrere Stege und Einführspalte über den Umfang des Gehäuses angeordnet. Die Stege und Einführspalte weisen bevorzugt die gleiche Umfangslänge auf, die Stege und Einführspalte wechseln sich also paarweise ab und haben alle eine identische Umfangslänge.

Im Folgenden werden Ausführungsbeispiele der Erfindung anhand der beiliegenden Zeichnungen erläutert. Dabei zeigen:
Fig. 1 einen Schnitt durch eine Ausrückvorrichtung;
Fig. 2 eine Explosionsdarstellung einer erfindungsgemäßen Ausrückvorrichtung;
Fig. 3 eine vergrößerte Darstellung der Stege und Einführspalten in Fig. 2

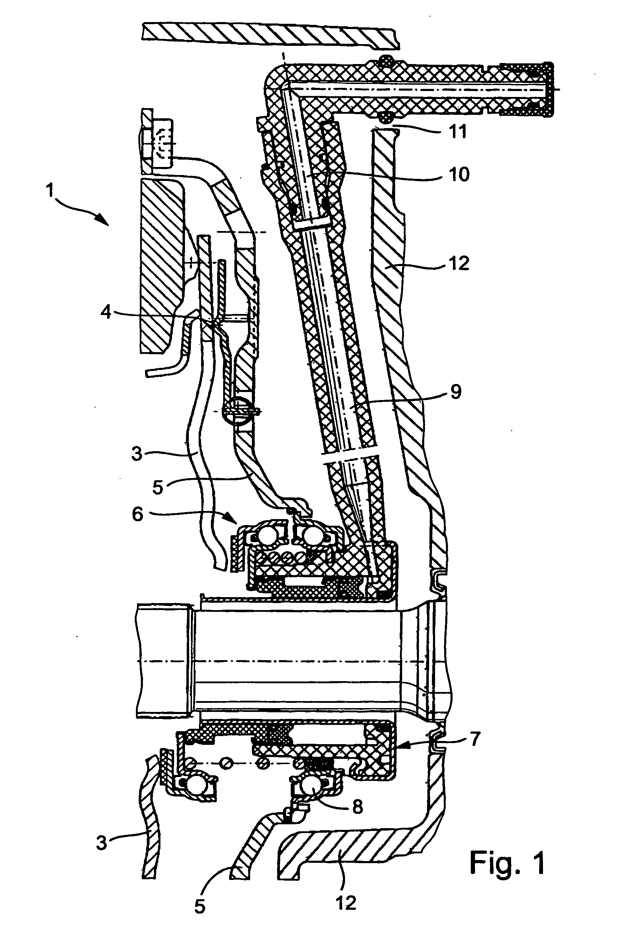

Fig. 1 zeigt einen Ausschnitt aus einem Antriebsstrang eines Kraftfahrzeuges mit einer Fahrzeugkupplung 1, diese ist hier eine Reibungs-Trockenkupplung, welche eine nicht dargestellte Kurbelwelle einer Brennkraftmaschine mit einer Getriebeeingangswelle 2 eines Untersetzungsgetriebes ein- und auskuppelbar verbindet. Die Kupplung 1 umfasst eine drehfest mit der Kurbelwelle verbundene hier nicht dargestellte Kupplungsscheibe, sowie eine drehfest mit der Getriebeeingangswelle 2 verbundene ebenfalls nicht dargestellte Kupplungsscheibe, die von einer Tellerfeder 3 aufeinander gedrückt werden. Die Tellerfeder 3 ist um ein Auflager 4 drehbeweglich am Gehäusedeckel 5 gelagert. Die Drehbewegung der Tellerfeder 3 erfolgt in bekannter Weise durch eine Verformung der Tellerfeder 3 dergestalt, dass diese in der Darstellung der Fig. 1 eine Drehbewegung in der Zeichenebene um das Auflager 4 ausführt, wobei die Tellerfeder 3 über ihren gesamten Umfang jeweils in radialer Richtung betrachtet die im Wesentlichen gleiche Bewegung bzw. Verformung ausführt.

Die Tellerfeder 3 wird betätigt von einem Ausrücklager 6, das von einer Ausrückvorrichtung 7, einem so genannten Zentralausrücker, betätigt wird. Die Ausrückvorrichtung 7 ist über ein Deckellager 8 drehbar mit dem Gehäusedeckel 5 verbunden. Die Ausrückvorrichtung 7 ist auf diese Weise insgesamt verdrehbar gegenüber der Tellerfeder 3 und dem Gehäusedeckel 5, der wiederum drehfest mit der Kupplungsscheibe, die mit der Getriebeeingangswelle 2 verbunden ist, verbunden. Die Ausrückvorrichtung 7 umfasst einen Hydraulikanschluss 9, der mehrteilig ausgeführt ist, was durch eine Verbindungsstelle 10 in Fig. 1 dargestellt ist, und ist durch eine Öffnung 11 einer Kupplungsglocke 12 herausgeführt, die die gesamte Anordnung der Kupplung und der Kupplungsausrückvorrichtung umfasst.

Nachfolgend wird die Anordnung mit der Ausrückvorrichtung 7, der Tellerfeder 3, dem Gehäusedeckel 5, dem Ausrücklager 6 sowie dem Decklager 8 als Kupplungsausrückanordnung 13 bezeichnet. Der obere Teil der Kupplungsausrückanordnung 13 in Fig. 1 ist dargestellt bei eingekuppelter Fahrzeugkupplung 1, der untere Teil bei ausgekuppelter Fahrzeugkupplung 1, dies entspricht den beiden im Betrieb genutzten Endstellungen der Ausrückvorrichtung 7.

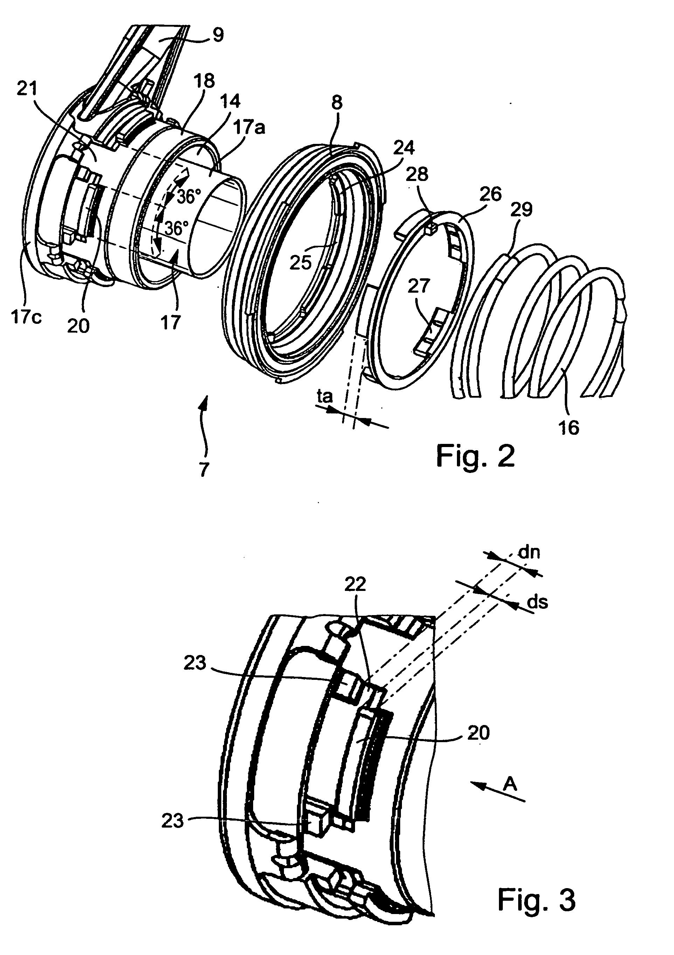

Durch den Hydraulikanschluss 9 ist der Ausrückvorrichtung 7 gegen Verdrehung gegenüber der Kupplungsglocke 12 festgelegt. Bei rotierender Getriebeeingangswelle 2 rotiert die mit dieser drehfest verbundenen Kupplungsscheibe sowie alle mit der Kupplungsscheibe drehfest verbundenen Anbauteile, in der Darstellung der Fig. 2 sind dies insbesondere die Tellerfeder 3 sowie der Gehäusedeckel 5. Das Ausrücklager 6 sowie das Decklager 8 ermöglichen eine Rotation dieser beiden Bauteile gegenüber der Ausrückvorrichtung 7.

Die Ausrückvorrichtung 7 umfasst ein Gehäuse 18, das mit einer Hülse 17 einen ringförmigen Druckraum 14 bildet. In dem Druckraum 14 ist ein Ringkolben 15 axial verschiebbar angeordnet. Der Druckraum 14 wird über den Hydraulikanschluss 9 mit einem unter Druck stehenden Hydraulikfluid beaufschlagt. Die Hülse 17 umfasst im Wesentlichen einen zylindrischen Teil 17a sowie einen Hülsenflansch 17b mit einer Umbördelung 17c. Die Umbördelung 17c umgreift einen kreisringförmigen Gehäuseflansch 19 des Gehäuses 18, das insbesondere als Kunststoffgehäuse ausgebildet ist. Der Ringkolben 15 ist mit dem Ausrücklager 6 verbunden. Zwischen Ringkolben 15 und Gehäuse 18 ist eine Vorlastfeder 16 angeordnet, die beide Teile auseinanderdrückt und so ein Anliegen des Ausrücklagers 6 an die Tellerfeder 3 bewirkt.

Fig. 2 zeigt die Ausrückvorrichtung 7 in einer Explosionsdarstellung. Das Gehäuse 18 ist bereits mit der Hülse 17 vormontiert, zwischen dem zylindrischen Teil 17a der Hülse 17 und dem Gehäuse 18 ist der Druckraum 14 als ringförmiger Hohlraum zu erkennen. Zu erkennen ist weiterhin die Umbördelung 17c, die den Gehäuseflansch 19 umgreift. Zu erkennen ist des Weiteren der Hydraulikanschluss 9. Am Außenumfang des Gehäuses 18 sind abwechselnd Stege 20 und Einführspalte 21 anordnet. Diese sind in Fig. 3 in der perspektivischen Darstellung entsprechend der Fig. 2 vergrößert dargestellt. Die Stege 20 und die Einführspalte 21 sind im vorliegenden Ausführungsbeispiel äquidistant aufgeteilt und besitzen jeweils gleiche Breite. Bei fünf Stegen 20 und fünf Einführspalten 21 ergibt das eine Teilung von jeweils 36°. Ebenso sind aber auch beliebige andere Aufteilungen, beispielsweise mit vier Stegen und vier Einführspalten 21 und folglich einer Teilung von 45° oder mit sechs Stegen und sechs Einführspalten 21 und folglich einer Teilung von 30° möglich. Die Stege 20 haben eine axiale Länge ds und gehen in Richtung des Gehäuseflansches 19 über in eine in Umfangsrichtung verlaufende Ringnut 22. Auf der dem Gehäuseflansch 19 zugewandten Seite der Ringnut 22 sind Anschläge 23 angeordnet. Diese sind in Umfangsrichtung des Gehäuses 18 so angeordnet, dass diese mit Blick in Richtung des Pfeiles A in Fig. 3 jeweils beiderseits der Stege 20 angeordnet sind. Die Anschläge 23 können sich dabei auch über den gesamten Umfangsbereich der Einführspalte 21 erstrecken und diese in Richtung des Gehäuseflansches 19 nach hinten abschließen. Die Stege 20 und die Einführspalte 21 sind Teile eines Bajonettverschlusses, das Deckellager 8 umfasst dazu an seiner Innenseite Innenstege 24 und Innenspalte 25, die über den Umfang verteilt die gleiche Aufteilung wie die Einführspalte 21 und die Stege 20 an dem Gehäuse 18 aufweisen. Der Bajonettverschluss umfasst also die Stege 20 und Einführspalte 21 an dem Gehäuse sowie die dazu korrespondierende Innenstege 24 und Innenspalte 25 an dem Deckellager 8, wobei die Innenstege 24 in einer Einführstellung des Deckellagers 8 gegenüber dem Gehäuse 18 in die Einführspalte 21 bis zu einer Verdrehstellung axial eingeschoben werden können und durch Drehen in eine Endstellung gebracht werden können. Das Deckellager 8 umfasst einen Innenring sowie einen Außenring, die durch ein Wälzlager drehbar gegeneinander sind. Der Innenring ist in Einbaulage mit dem Gehäuse 18, der Außenring mit dem Gehäusedeckel 5 verbunden. Der Innendurchmesser des Deckellagers 8 und damit der Innendurchmesser des Innenringes ist größer als der Außendurchmessers des Gehäuses 18, so dass diese aufeinander geschoben werden können. Der Innendurchmesser der Innenstege 24 entspricht dem Außendurchmesser des Gehäuses 18 im Bereich der Stege 20 auf, der Außendurchmesser des Gehäuses 18 im Bereich der Einführspalte 21 kann geringer sein, so dass das Deckellager 8 mit einem Spiel auf das Gehäuse 18 aufgeschoben werden kann und das radiale Spiel erst bei Verdrehen des Deckellagers 8 gegenüber dem Gehäuse 18 verringert wird. In einer Stellung, in der die Innenstege 24 mit den Einführspalten 21 korrespondieren, kann das Deckellager 8 auf das Gehäuse 18 so weit aufgeschoben werden, dass die Innenstege 24 an den Anschlägen 23 anliegen. In dieser Stellung können die Innenstege 24 durch Drehung des Deckellagers 8 gegenüber dem Gehäuse 18 in die Ringnut 22 geschoben werden, dies erfolgt bei dem vorliegenden Ausführungsbeispiel durch eine Drehung des Deckellagers 8 gegenüber dem Gehäuses 18 um einen Winkel von 36°. Damit ist der Bajonettverschluss zwischen Deckellager 8 und Gehäuse 18 hergestellt. Ein Rückdrehen oder Weiterdrehen zwischen Deckellager 8 und Gehäuse 18 wird durch Einbringen eines Stützringes 26 verhindert, der Axialstege 27 umfasst, deren axiale Länge ta größer als die Dicke ds ist, so dass diese so in den Spalt zwischen dem Deckellager 8 und dem Gehäuse 18 eingeführt werden können und die Axialstege 27 in die Einführspalte 21 ragen. Damit ist der Bajonettverschluss verriegelt.

Eine axiale Verschiebung des Stützringes 26 entgegen der Pfeilrichtung A in Fig. 4, also ein Herausfallen aus der Einbaulage, wird durch die Vorlastfeder 16 verhindert, die sich an dem Stützring 26 abstützt. Zur Verdrehsicherung der Vorlastfeder 16 ist eine Nase 28 an den Stützring 26 angeordnet, die z.B. in eine Stufe 29 der Vorlastfeder 16 eingreift.

Nachfolgend wird der Ablauf der Montage von Gehäuse 18, Deckellager 8 sowie Stützring 26 beschrieben. Das Gehäuse 18 ist bereits vormontiert mit der Hülse 17. Die Innenstege 24 des Deckellagers 8 werden in die Einführspalte 21 des Gehäuses 18 eingeführt, bis diese an die Anschläge 23 anstoßen. Dann erfolgt eine 36° Drehung im Uhrzeigersinn oder gegen den Uhrzeigersinn, so dass die Innenstege 24 hinter den Stegen20 in der Ringnut 22 zu liegen kommen. In dieser Stellung sind die Einführspalten 21 wieder frei. Nun wird der Stützring 26 so in den Spalt zwischen Gehäuse 18 und Deckellager 8 eingeschoben, dass die Axialstege 27 des Stützrings 26 in den Einführspalten 21 zu liegen kommen. Die axiale Länge ta der Axialstege 27 kann beispielsweise der Summe aus der axialen Länge ds der Stege 20 und der axialen Läge dn der Ringnut 22 entsprechen. Ist die Länge ta kleiner, so liegt der Stützring 26 einzig an den Stegen 20 an, ist diese Länge größer, so liegt der Stützring 26 einzig mit den Axialstegen 27 an den Anschläge 23 an. Anschließend wird die montierte Baugruppe umfassend das Deckellager 8, das Gehäuse 18, die Hülse 17 sowie den Stützring 26 weiter montiert.

### Bezugszeichenliste

- 1: Kupplung
- 2: Getriebeeingangswelle
- 3: Tellerfeder
- 4: Auflager
- 5: Gehäusedeckel
- 6: Ausrücklager
- 7: Ausrückvorrichtung
- 8: Deckellager
- 9: Hydraulikanschluss
- 10: Verbindungsstelle
- 11: Öffnung
- 12: Kupplungsglocke
- 13: Kupplungsausrückvorrichtung
- 14: Druckraum
- 15: Ringkolben
- 16: Vorlastfeder
- 17: Hülse
- 17a: Zylindrischer Teil
- 17b: Hülsenflansch
- 17c: Umbördelung
- 18: Gehäuse
- 19: Gehäuseflansch
- 20: Stege
- 21: Einführspalte
- 22: Ringnut
- 23: Anschlag
- 24: Innenstege
- 25: Innenspalte
- 26: Stützring
- 27: Axialstege
- 28: Nase
- 29: Stufe
- dn: Axiale Länge der Ringnut 22
- ds: Axiale Länge der Stege 20
- ta: Axiale Länge Axialsteg 27

## Patentansprüche

1. Ausrückvorrichtung (7) für eine Fahrzeugkupplung, bei der ein Gehäuse (18) der Ausrückvorrichtung mittels Bajonettverschluss (22, 23, 24, 25) mit einem Deckellager (8) verbunden ist, wobei das Deckellager (8) eine drehbare Verbindung mit einem Gehäusedeckel (5) ermöglicht, **dadurch gekennzeichnet, dass** der Bajonettverschluss (22, 23, 24, 25) eine Verdrehsicherung (26) aufweist.

2. Ausrückvorrichtung nach Anspruch 1, **dadurch gekennzeichnet, dass** die Verdrehsicherung ein Stützring (26) ist, der mindestens einen Axialsteg (27) umfasst.

3. Ausrückvorrichtung nach Anspruch 2, **dadurch gekennzeichnet, dass** der Stützring (26) mehrere Axialstege (27) umfasst, die jeweils in einen Einführspalt (21) eingreifen.

4. Ausrückvorrichtung nach Anspruch 2 oder 3, **dadurch gekennzeichnet, dass** der mindestens eine Axialsteg (27) eine axiale Länge (ta) aufweist.

5. Ausrückvorrichtung nach Anspruch 1, **dadurch gekennzeichnet, dass** der Bajonettverschluss mindestens einen Steg (20) und mindestens einen Einführspalt (21) an dem Gehäuse (18) sowie mindestens einen dazu korrespondierenden Innensteg (24) und Innenspalt (25) an dem Deckellager (8) umfasst, wobei der Innensteg (24) in einer Einführstellung des Deckellagers (8) gegenüber dem Gehäuse (18) in den Einführspalt (21) bis zu einer Verdrehstellung axial eingeschoben werden kann und durch Drehen in eine Endstellung gebracht werden kann.

6. Ausrückvorrichtung nach Anspruch 5, **dadurch gekennzeichnet, dass** der Bajonettverschluss mindestens Anschlag (23) umfasst.

7. Ausrückvorrichtung nach Anspruch 6, **dadurch gekennzeichnet, dass** der Anschlag (23) und der Steg (20) eine Ringnut (22) bilden, deren axiale Länge der axialen Länge des Innensteges (24) entsprechen.

8. Ausrückvorrichtung nach Anspruch 4 und 8, **dadurch gekennzeichnet, dass** die Länge (ta) etwa der Summe der axialen Länge (ds) des Steges (20) und axialen Länge (dn) der Ringnut (22) entspricht.

9. Ausrückvorrichtung nach Anspruch 5, 6 und 7, **dadurch gekennzeichnet, dass** sich der Anschlag (23) über einen Teil des Umfanges des Einführspaltes (21) erstreckt.

10. Ausrückvorrichtung nach Anspruch 5, **dadurch gekennzeichnet, dass** mehrere Stege (20) und Einführspalte (21) über den Umfang des Gehäuses (18) angeordnet sind.

11. Ausrückvorrichtung nach Anspruch 10, **dadurch gekennzeichnet, dass** die Stege (20) und Einführspalte (21) die gleiche Umfangslänge aufweisen.

## Claims

1. Release device (7) for a vehicle clutch, in which a housing (18) of the release device is connected by means of a bayonet closbure (22, 23, 24, 25) to a cover bearing (8), the cover earing (8) making a rotatable connection to a housing cover (5) possible, **characterized in that** the bayonet closure (22, 23, 24, 25) has an anti-rotation safeguard (26).

2. Release device according to Claim 1, **characterized in that** the anti-rotation safeguard is a supporting ring (26) which has at least one axial web (27).

3. Release device according to Claim 2, **characterized in that** the supporting ring (26) comprises a plurality of axial webs (27) which engage in each case into an insertion gap (21).

4. Release device according to Claim 2 or 3, **characterized in that** the at least one axial web (27) has an axial length (ta).

5. Release device according to Claim 1, **characterized in that** the bayonet closure comprises at least one web (20) and at least one insertion gap (21) on the housing (18) and at least one corresponding inner web (24) and inner gap (25) on the cover bearing (8), it being possible, in an insertion position of the cover bearing (8) with respect to the housing (18), for the inner web (24) to be pushed axially into the insertion gap (21) as far as a rotation position, and it being possible for it to be moved into an end position by rotation.

6. Release device according to Claim 5, **characterized in that** the bayonet closure comprises at least one stop (23).

7. Release device according to Claim 6, **characterized in that** the stop (23) and the web (20) form an annular groove (22), the axial length of which corresponds to the axial length of the inner web (24).

8. Release device according to Claims 4 and 8, **characterized in that** the length (ta) corresponds approximately to the sum of the axial length (ds) of the web (20) and the axial length (dn) of the annular groove (22).

9. Release device according to Claims 5, 6 and 7, **characterized in that** the stop (23) extends over part of the circumference of the insertion gap (21).

10. Release device according to Claim 5, **characterized in that** a plurality of webs (20) and insertion gaps (21) are arranged over the circumference of the housing (18).

11. Release device according to Claim 10, **characterized in that** the webs (20) and insertion gaps (21) have the same circumferential length.

## Revendications

1. Dispositif d'embrayage (7) pour un embrayage de véhicule, dans lequel un carter (18) du dispositif d'embrayage est relié à un palier à chapeau (8) à l'aide d'une fermeture à baïonnette (22, 23, 24, 25), le palier à chapeau (8) permettant de réaliser une liaison pivotante avec un chapeau de carter (5), **caractérisé en ce que** la fermeture à baïonnette (22, 23, 24, 25) comporte une protection antirotation (26).

2. Dispositif d'embrayage selon la revendication 1, **caractérisé en ce que** la protection antirotation est une bague de soutien (26) comprenant au moins un étai axial (27).

3. Dispositif d'embrayage selon la revendication 2, **caractérisé en ce que** la bague de soutien (26) comprend plusieurs étais axiaux (27) s'engrenant respectivement dans une fente d'introduction (21).

4. Dispositif d'embrayage selon la revendication 2 ou 3, **caractérisé en ce que** l'au moins un étai axial (27) présente une longueur axiale (ta).

5. Dispositif d'embrayage selon la revendication 1, **caractérisé en ce que** la fermeture à baïonnette comporte au moins un étai (20) et au moins une fente d'introduction (21) au niveau du carter (18) ainsi qu'au moins un étai intérieur (24) et une fente intérieure (25) leur correspondant au niveau du palier à chapeau (8), l'étai intérieur (24) pouvant être poussé dans le plan axial dans la fente d'introduction (21) dans une position d'introduction du palier à chapeau (8) par rapport au carter (18) jusqu'à une position de rotation et être amené par rotation dans une position de butée.

6. Dispositif d'embrayage selon la revendication 5, **caractérisé en ce que** la fermeture à baïonnette comprend au moins une butée (23).

7. Dispositif d'embrayage selon la revendication 6, **caractérisé en ce que** la butée (23) et l'étai (20) forment une rainure annulaire (22) dont la longueur axiale correspond à la longueur axiale de l'étai intérieur (24).

8. Dispositif d'embrayage selon la revendication 4 et 8, **caractérisé en ce que** la longueur (ta) correspond quelque peu à la somme de la longueur axiale (ds) de l'étai (20) et de la longueur axiale (dn) de la rainure annulaire (22).

9. Dispositif d'embrayage selon la revendication 5, 6 et 7, **caractérisé en ce que** la butée (23) s'étend sur une partie du périmètre de la fente d'introduction (21).

10. Dispositif d'embrayage selon la revendication 5, **caractérisé en ce que** plusieurs étais (20) et fentes d'introduction (21) sont disposés sur la périphérie du carter (18).

11. Dispositif d'embrayage selon la revendication 10, **caractérisé en ce que** les étais (20) et les fentes d'introduction (21) présentent la même longueur circonférentielle.
